# EUROPEAN PATENT APPLICATION

(11) **EP 4 822 522 A2**
(43) Date of publication of application: **14.10.2026**
(21) Application number: 26202053.0
(22) Date of filing: 31.08.2026
(51) Int. Cl.: G06F 8/35, G06F 8/30, G06F 8/41

(54) **METHOD AND APPARATUS FOR GENERATING AGENT EXECUTION INSTRUCTIONS, MEDIUM, AND ELECTRONIC DEVICE**

(30) Priority: 03.06.2026 CN 202610796343
(71) Applicant: XG TECH PTE. LTD., Singapore 179098 (SG)
(72) Inventor: LIN, Tao, 179098 Singapore (SG); CAO, Feixiang, 179098 Singapore (SG); MAO, Yunjie, 179098 Singapore (SG); LI, Mengchen, 179098 Singapore (SG); LU, Yawei, 179098 Singapore (SG)
(74) Representative: Dehns Germany Partnerschaft mbB

(57) **Abstract**

Disclosed are a method and apparatus for generating agent execution instructions, a medium, and an electronic device. The method includes: obtaining (S210) a first intermediate representation of a tool in tool information based on a user-input natural language instruction and tool information corresponding to the natural language instruction, the first intermediate representation of the tool indicating syntactic information, semantic information, and execution information of the tool; obtaining (S220) an input prompt of an LLM based on the first intermediate representation of the tool in the tool information and a prompt template of the LLM; inputting the input prompt into the LLM to obtain an output result of the large language model; obtaining (S230) a second intermediate representation of a tool in the output result based on the output result; and generating (S240) an agent execution instruction based on the second intermediate representation of the tool in the output result.

## Description

### TECHNICAL FIELD

The present disclosure relates to the field of artificial intelligence technology, and in particular to a method and apparatus for generating agent execution instructions, a medium, and an electronic device.

### BACKGROUND

With the development of artificial intelligence, agents have been widely applied in various fields such as intelligent devices, healthcare, and software development. Tool invocation is a core mechanism for an agent to interact with external systems. The agent understands a user's intent through a large language model and responds to the user's instructions by invoking corresponding tools. An agent typically needs to interface with different large language models, and different large language models have different input prompt formats and output result formats.

### SUMMARY

Since different large language models differ in input prompt formats and output result formats, and the input prompts and output results are tightly coupled with tool definitions. Currently, when an agent interfaces with multiple large language models, there is a lack of a unified tool invocation format. It is necessary to separately maintain a prompt template, a tool definition format, and output result parsing logic for each large language model, resulting in high maintenance costs for adapting the agent to multiple models and reduced work efficiency.

To solve the above technical problem, the present disclosure provides a method for generating agent execution instructions, which is capable of generating a unified tool invocation format through an intermediate representation (Intermediate Representation, IR) of tools, thereby improving the flexibility of an agent in adapting to multiple models and improving work efficiency.

A first aspect of the present disclosure provides a method for generating agent execution instructions. The method includes: obtaining a first intermediate representation of a tool in tool information based on a natural language instruction input by a user and tool information corresponding to the natural language instruction, wherein the first intermediate representation of the tool is used for indicating syntactic information, semantic information, and execution information of the tool; obtaining an input prompt of a large language model based on the first intermediate representation of the tool in the tool information and a prompt template of the large language model; inputting the input prompt into the large language model to obtain an output result of the large language model; obtaining a second intermediate representation of a tool in the output result based on the output result; and generating an agent execution instruction based on the second intermediate representation of the tool in the output result.

A second aspect of the present disclosure provides an apparatus for generating agent execution instructions. The apparatus includes: a first parsing module, configured to obtain a first intermediate representation of a tool in tool information based on a natural language instruction input by a user and tool information corresponding to the natural language instruction, where the first intermediate representation of the tool is used for indicating syntactic information, semantic information, and execution information of the tool; a first generation module, configured to obtain an input prompt of a large language model based on the first intermediate representation of the tool in the tool information and a prompt template of the large language model, and to input the input prompt into the large language model; a second parsing module, configured to acquire an output result of the large language model, and to obtain a second intermediate representation of a tool in the output result based on the output result; and a second generation module, configured to generate an agent execution instruction based on the second intermediate representation of the tool in the output result.

A third aspect of the present disclosure provides a computer-readable storage medium. The storage medium stores a computer program, and the computer program is configured to execute the method for generating agent execution instructions provided in the first aspect above.

A fourth aspect of the present disclosure provides an electronic device. The electronic device includes: a processor; a memory for storing instructions executable by the processor; and the processor, configured to read the executable instructions from the memory and execute the instructions to implement the method for generating agent execution instructions provided in the first aspect above.

The embodiments of the present disclosure provide a method and apparatus for generating agent execution instructions, a medium, and an electronic device, which can be applied to the field of artificial intelligence technology and are capable of parsing a natural language instruction input by a user and tool information corresponding to the natural language instruction to obtain a first intermediate representation of a tool in the tool information. An input prompt of a large language model is obtained through the first intermediate representation of the tool and a prompt template of the large language model, the input prompt is input into the large language model, and an output result is obtained. The output result is parsed to obtain a second intermediate representation of a tool in the output result, and an agent execution instruction is then generated. In this way, a unified tool invocation format is generated through the first intermediate representation and the second intermediate representation of the tool, thereby decoupling the tool definition from the input prompt of the large language model. A developer only needs to maintain a single set of standard tool definitions, and the agent can automatically adapt to multiple models, significantly improving the flexibility of the agent in adapting to different large language models and improving work efficiency.

### BRIEF DESCRIPTION OF THE DRAWINGS

By describing the embodiments of the present disclosure in more detail with reference to the accompanying drawings, the above and other objects, features, and advantages of the present disclosure will become more apparent. The accompanying drawings are used to provide a further understanding of the embodiments of the present disclosure and constitute a part of the specification, are used together with the embodiments of the present disclosure to explain the present disclosure, and do not constitute a limitation on the present disclosure. In the drawings, the same reference numerals generally represent the same components or steps.
FIG. 1 is a schematic architectural diagram of an intelligent system provided by an exemplary embodiment of the present disclosure;
FIG. 2 is a schematic flowchart of a method for generating agent execution instructions provided by an exemplary embodiment of the present disclosure;
FIG. 3 is a schematic flowchart of step S210 provided by an exemplary embodiment of the present disclosure;
FIG. 4 is a schematic flowchart of step S212 provided by an exemplary embodiment of the present disclosure;
FIG. 5 is a schematic flowchart of step S220 provided by an exemplary embodiment of the present disclosure;
FIG. 6 is a schematic flowchart of step S221 provided by an exemplary embodiment of the present disclosure;
FIG. 7 is a schematic flowchart of step S230 provided by an exemplary embodiment of the present disclosure;
FIG. 8 is a schematic flowchart of step S240 provided by an exemplary embodiment of the present disclosure;
FIG. 9 is a schematic flowchart of step S241 provided by an exemplary embodiment of the present disclosure;
FIG. 10 is a schematic flowchart of step S242 provided by an exemplary embodiment of the present disclosure;
FIG. 11 is a schematic structural diagram of an apparatus for generating agent execution instructions provided by an exemplary embodiment of the present disclosure;
FIG. 12 is a structural diagram of an electronic device provided by an exemplary embodiment of the present disclosure.

### DETAILED DESCRIPTION

To explain the present disclosure, exemplary embodiments of the present disclosure will be described in detail below with reference to the accompanying drawings. Obviously, the described embodiments are only a part of the embodiments of the present disclosure rather than all of the embodiments. It should be understood that the present disclosure is not limited by the exemplary embodiments.

It should be noted that unless otherwise specifically stated, the relative arrangement, numerical expressions, and numerical values of the components and steps set forth in these embodiments do not limit the scope of the present disclosure.

### Application overview

With the rapid development of artificial intelligence, agents have been widely applied in various fields such as intelligent devices, healthcare, and software development. An agent frequently needs to interface with different large language models (LLM). For example, in a modern intelligent vehicle-mounted computing platform, in order to balance response speed and processing depth, an architecture in which a device-side model and a cloud-side model coexist is adopted. Therein, a lightweight LLM is deployed on the device side for basic vehicle control, and a large-scale LLM is accessed on the cloud side for complex reasoning. Both the device-side model and the cloud-side model may adopt a variety of different LLMs. However, different LLMs have different input prompt formats and output result formats, and a tight coupling relationship exists between the input prompts and output results and tool definitions. For example, a device-side model adopts a ChatML input prompt format, which includes markers such as im_start and im_end, and the output result adopts a ChatML-JSON hybrid format, with tool definitions through a tool_call tag; while a cloud-side model adopts a JSON input prompt format, which includes markers such as start_of_turn and end_of_turn, and the output result adopts a DSL format, with tool definitions through a call keyword. Therefore, when an agent interfaces with multiple large language models, a traditional method needs to separately maintain a prompt template, a tool definition format, and output result parsing logic for each large language model, resulting in difficulty in making backend execution logic compatible, high maintenance costs for adapting the agent to multiple models, and reduced work efficiency.

To address the above problem, there are mainly the following related solutions: one solution is to directly use the native API interfaces of the respective models and write tool invocation code separately according to the format requirements of each model, but this solution has problems of large adaptation workload and high maintenance costs. When a new model needs to be added, the entire set of adaptation logic needs to be rewritten, resulting in poor scalability. Another solution is to maintain multiple parsers in the backend to separately handle the outputs of different models, but this solution also has problems of large adaptation workload and high maintenance costs.

The embodiments of the present disclosure provide a method for generating agent execution instructions, which is capable of parsing and mapping a natural language instruction input by a user and tool information corresponding to the natural language instruction to obtain a model-independent first intermediate representation of a tool in the tool information. An input prompt of a large language model is obtained through the first intermediate representation of the tool and a prompt template of the large language model, the input prompt is input into the large language model, and an output result is obtained. The output result is parsed to obtain a model-independent second intermediate representation of a tool in the output result, and an agent execution instruction is then generated. In this way, a unified tool invocation format is generated through the first intermediate representation and the second intermediate representation of the tool, thereby decoupling the tool definition from the input prompt of the large language model. A unified adaptation of the input and output of multiple models is achieved. A developer only needs to maintain a single set of standard tool definitions, and the agent can automatically adapt to multiple models without writing parsing code separately for each model, significantly improving the flexibility and scalability of the agent in adapting to different large language models and improving work efficiency.

### Exemplary system

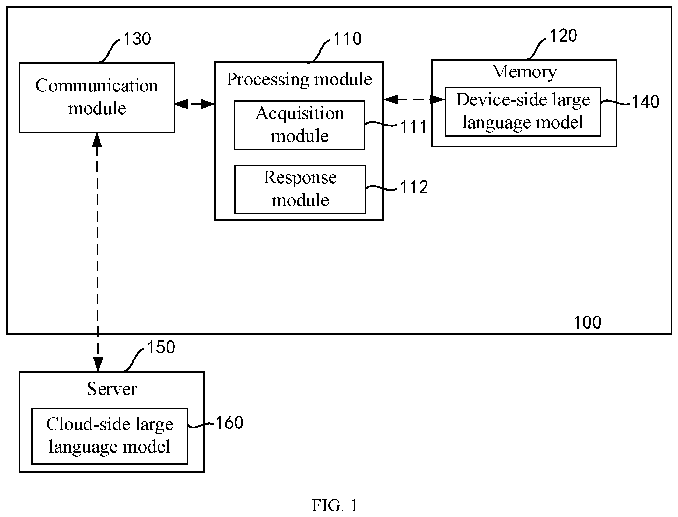

FIG. 1 is a schematic architectural diagram of an intelligent system provided by an exemplary embodiment of the present disclosure.

As shown in FIG. 1, in some embodiments, the intelligent system 100 includes a processing module 110 and a memory 120.

In some application scenarios, the intelligent system may be a vehicle-mounted system. The intelligent system is described below using the vehicle-mounted system as an example.

The processing module 110 may be a general-purpose vehicle-mounted computing platform, and is communicatively connected to the memory 120 to implement the transmission of instructions and data. The processing module 110 may include an acquisition module 111 and a response module 112.

The acquisition module 111 is configured to acquire a natural language instruction input by a user. The natural language instruction may be a voice instruction or a text instruction. Exemplarily, the acquisition module 111 may include an audio input device, such as a microphone, configured to acquire a voice instruction input by the user. The acquisition module 111 may include a touch sensor, which can acquire a text instruction input by the user via a central control screen of an intelligent cockpit.

The response module 112 is configured to acquire tool information corresponding to the acquired natural language instruction, obtain a first intermediate representation of a tool based on the natural language instruction and the corresponding tool information, invoke a device-side large language model 140 based on the first intermediate representation of the tool to obtain an output result, obtain a second intermediate representation of a tool based on the output result, then generate execution instructions, and invoke an agent to execute these instructions to obtain an execution result and feed it back to the user. The response module may include a digital signal processor, a central processing unit, a neural network processing unit, an AI accelerator, and the like.

Exemplarily, when a user inputs a natural language instruction to the intelligent cockpit via voice or touch, the response module 112 preprocesses the natural language instruction input by the user. For example, for a voice instruction input via voice, the response module 112 may perform noise reduction and enhancement, text conversion, and semantic parsing on the voice instruction. Then, the response module 112 acquires corresponding tool information according to the result of the semantic parsing, obtains a first intermediate representation of a tool in the tool information based on the structured data obtained after preprocessing and the corresponding tool information, compiles a prompt template of the device-side large language model based on the first intermediate representation of the tool to generate an input prompt of the device-side large language model, and invokes the device-side large language model 140 deployed in the memory 120 to obtain an output result of the device-side large language model. Then, a second intermediate representation of a tool in the output result is obtained based on the output result of the device-side large language model, execution instructions are then generated, and an agent is invoked to execute these instructions to obtain an execution result, which is fed back to the user through the response module 112 in the form of voice broadcast, screen display, or a multimodal combination.

The memory 120 is configured to store the device-side large language model 140 and to provide computing resources and data cache space for the device-side large language model 140.

In some embodiments, the intelligent system 100 further includes a communication module 130. The communication module 130 is configured to respectively establish communication connections with the processing module 110 and a server 150.

The server 150 is configured to store a cloud-side large language model 160 and to provide computing resources and data cache space for the cloud-side large language model 160, so as to deploy a large-scale cloud-side large language model on the server 150 for complex reasoning and reduce the computing resource consumption of the intelligent cockpit.

Exemplarily, the response module 112 may compile a prompt template of the cloud-side large language model based on the first intermediate representation of the tool to generate an input prompt of the cloud-side large language model. The communication module 130 may upload the input prompt of the cloud-side large language model to the server 150 through the communication connection, thereby invoking the cloud-side large language model 160 deployed on the server 150 to obtain an output result of the cloud-side large language model. The communication module 130 may send the output result of the cloud-side large language model to the response module 112 through the communication connection. The response module 112 then obtains a second intermediate representation of a tool in the output result based on the output result of the cloud-side large language model, then generates execution instructions, and invokes an agent to execute these instructions to obtain an execution result and feed it back to the user.

In some embodiments, the processing module 110 may select to invoke the device-side large language model and/or the cloud-side large language model according to the result of the semantic parsing of the natural language instruction and the usage of the computing resources of the intelligent cockpit, which is not limited by the present disclosure.

### Exemplary method

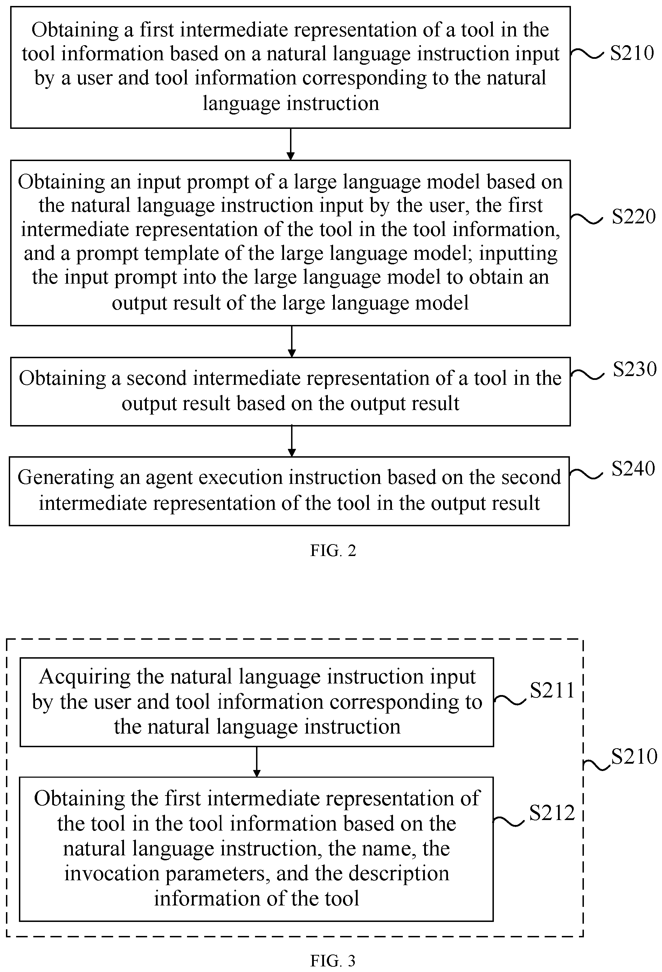

FIG. 2 is a schematic flowchart of a method for generating agent execution instructions provided by an exemplary embodiment of the present disclosure. This embodiment may be applied to an electronic device, as shown in FIG. 2, including the following steps:
Step S210: obtaining a first intermediate representation of a tool in the tool information based on a natural language instruction input by a user and tool information corresponding to the natural language instruction.

The first intermediate representation of the tool is used for indicating syntactic information, semantic information, and execution information of the tool. The first intermediate representation of the tool has a preset structured format, such as a JSON format.

In some embodiments, the first intermediate representation of the tool includes a syntax intermediate representation (Syntax IR), a semantic intermediate representation (Semantic IR), and an execution intermediate representation (Execution IR). The syntax intermediate representation is used for indicating the syntactic information of the tool, the semantic intermediate representation is used for indicating the semantic information of the tool, and the execution intermediate representation is used for indicating the execution information of the tool.

In one implementation, the syntactic information includes a name and invocation parameter information of the tool, the semantic information includes a purpose and a domain of the tool, and the execution information includes a priority and execution dependency relationship information of the tool. The invocation parameter information of the tool includes a name and content of an invocation parameter, and the execution dependency relationship information of the tool includes a tool that is mutually exclusive with the tool during execution and a tool on which the tool depends.

The natural language instruction input by the user may be a voice instruction or a text instruction. Exemplarily, the content of the natural language instruction may be "query the weather in Istanbul today," "navigate to the nearest charging station," and the like.

The tool information is a "manual" or "interface description" defining tools (functions) that can be invoked by the agent, and includes descriptive information of the tools. The tools (functions) that can be invoked by the agent include tools (functions) that can be invoked locally and tools (functions) that require network access for invocation. The tool information may adopt a structured or semi-structured format. The tool information corresponding to the natural language instruction refers to the "manual" or "interface description" of the tools (functions) that the agent needs to invoke to respond to the natural language instruction input by the user.

It should be noted that the tool information may be pre-stored in the electronic device according to actual conditions.

After a natural language instruction input by the user is received, the natural language instruction may be parsed, tool information corresponding to the natural language instruction is obtained based on the parsing result of the natural language instruction, the corresponding tool information is then parsed, and a first intermediate representation of a tool in the corresponding tool information is generated based on the parsing results of the natural language instruction and the corresponding tool information. The number of tools in the tool information corresponding to the natural language instruction may be one or more.

Step S220: obtaining an input prompt of a large language model based on the natural language instruction input by the user, the first intermediate representation of the tool in the tool information, and a prompt template of the large language model; inputting the input prompt into the large language model to obtain an output result of the large language model.

The prompt template of the large language model is used for representing a template of a prompt conforming to the input prompt format requirements of the large language model.

It should be noted that prompt templates of multiple large language models may be pre-stored in the electronic device. A currently selected large language model is used as a target large language model, and a prompt template corresponding to the target large language model is read. For example, the target large language model adopts a ChatML input prompt format, and the corresponding prompt template includes markers such as im_start and im_end and a tool_call tag.

In some embodiments, the prompt template of the target large language model is compiled based on the first intermediate representation of the tool in the tool information, the syntactic information, semantic information, and execution information of the tool corresponding to the first intermediate representation are filled into the prompt template, so that an input prompt conforming to the format requirements of the target large language model can be generated.

The generated input prompt is sent to the target large language model for reasoning. The target large language model understands the user's intent based on the input prompt and generates an output result containing tool invocation information.

Through the first intermediate representation of the tool and the prompt template of the target large language model, an input prompt of the target large language model is obtained. A developer only needs to maintain a single set of standard first intermediate representations of tools and preset prompt templates to automatically generate input prompts adapted to multiple different open-source/closed-source large language models based on the first intermediate representation of the tool and the corresponding prompt template, significantly improving the flexibility and scalability of multi-model adaptation and improving work efficiency and reducing the migration costs of multiple models.

Step S230: obtaining a second intermediate representation of a tool in the output result based on the output result.

The second intermediate representation of the tool is used for indicating syntactic information and execution information of the tool.

In some embodiments, the second intermediate representation of the tool includes a syntax intermediate representation and an execution intermediate representation. The syntax intermediate representation is used for indicating the syntactic information of the tool, and the execution intermediate representation is used for indicating the execution information of the tool. The syntactic information includes a name and invocation parameter information of the tool, and the execution information includes execution dependency relationship information of the tool.

After the output result output by the target large language model is received, the output result may be parsed, and a second intermediate representation of a tool in the corresponding output result is generated based on the parsing result of the output result. The number of tools in the output result may be one or more.

Step S240: generating an agent execution instruction based on the second intermediate representation of the tool in the output result.

The agent execution instruction is used for representing a tool invocation instruction that can be executed by an agent.

Based on the syntactic information and execution information of the tool included in the second intermediate representation of the tool, an instruction executable by an agent can be generated, so that the agent executes a corresponding operation to respond to the user's instruction. The number of the agent execution instructions may be one or more.

The method provided by the embodiments of the present disclosure is capable of parsing and mapping a natural language instruction input by a user and tool information corresponding to the natural language instruction to obtain a model-independent first intermediate representation of a tool in the tool information. An input prompt of a large language model is obtained through the first intermediate representation of the tool and a prompt template of the large language model, the input prompt is input into the large language model, and an output result is obtained. The output result is parsed to obtain a model-independent second intermediate representation of a tool in the output result, and an agent execution instruction is then generated. In this way, a unified tool invocation format is generated through the first intermediate representation and the second intermediate representation of the tool, thereby decoupling the tool definition from the input prompt of the large language model. A unified adaptation of the input and output of multiple models is achieved. A developer only needs to maintain a single set of standard tool definitions, and the agent can automatically adapt to multiple models without writing parsing code separately for each model, significantly improving the flexibility and scalability of the agent in adapting to different large language models and improving work efficiency.

The solution of the present disclosure will be further described below with reference to the accompanying drawings.

FIG. 3 is a schematic flowchart of step S210 provided by an exemplary embodiment of the present disclosure. As shown in FIG. 3, step S210 may include the following steps S211 to S212:
Step S211: acquiring the natural language instruction input by the user and tool information corresponding to the natural language instruction.

The tool information includes a name, invocation parameters, and description information of a tool.

In one implementation, the invocation parameters of the tool include a name, a type, and a description of the invocation parameter, and the description information of the tool includes a purpose, a domain, a priority, and execution dependency relationship information of the tool. The execution dependency relationship information of the tool includes a tool that is mutually exclusive with the tool during execution and a tool on which the tool depends.

A tool that is mutually exclusive with the tool during execution is used for indicating a tool that logically cannot be executed simultaneously with the tool. For example, a tool for "deleting an account" cannot be executed simultaneously with a tool for "modifying account information," and the two are mutually exclusive. A tool on which the tool depends during execution is used for indicating a tool that provides input information for the execution of the tool. For example, a tool for "sending an email" depends on a tool for "obtaining a recipient list."

It should be noted that if, when the tool is executed, there are no tools on which it depends, then the tools that this tool depends on in the tool information are empty; if, when the tool is executed, there are no tools mutually exclusive with it, then the tools mutually exclusive with this tool in the tool information are empty.

In some embodiments, the natural language instruction input by the user may be in text form, and a text instruction input by the user may be acquired through a human-machine interaction device for subsequent parsing.

In some embodiments, the natural language instruction input by the user may be in voice form, and a voice instruction input by the user may be acquired through an audio device, subjected to voice recognition and noise reduction and enhancement, and converted into text for subsequent parsing.

In some embodiments, after a natural language instruction input by the user is received, semantic parsing may be performed on the natural language instruction, and tool information corresponding to the natural language instruction is acquired according to the result of the semantic parsing of the natural language instruction and the description information of the tools, that is, the name, invocation parameters, and description information of the tools that need to be invoked to respond to the natural language instruction are acquired.

Exemplarily, the natural language instruction input by the user is "query the weather in Istanbul today." The tool information is in JSON format and defines various tools that can be invoked by the agent, including a tool for weather querying. The name of the tool is "get_current_weather," the invocation parameters include: "location" (name of the invocation parameter), "string" (type of the invocation parameter), and "The city and country/state, e.g. San Francisco, CA, or Paris, France" (description of the invocation parameter). The description information includes: "Get the current weather in a given location" (purpose of the tool), ""domain": "weather""(domain of the tool), "High Priority" (priority of the tool), and ""depends_on":["tool_x"], "conflict":["tool_y"]" (execution dependency relationship of the tool). Semantic parsing is performed on the natural language instruction "query the weather in Istanbul today" to obtain the semantic parsing result of the natural language instruction, including: "user intent: query weather information; location: Istanbul, Turkey; time: today (i.e., the current date); query object: weather conditions." According to the semantic parsing result and the description information of each tool in the tool information (for example, the purpose of the tool), the description information of the tool that semantically matches the natural language instruction can be identified, that is, "Get the current weather in a given location," thereby acquiring the tool information corresponding to the natural language instruction, that is, the tool information related to the "get_current_weather" tool.

Step S212: obtaining the first intermediate representation of the tool in the tool information based on the natural language instruction, the name, the invocation parameters, and the description information of the tool.

In some embodiments, based on the semantic parsing result of the natural language instruction and the invocation parameters of the tool, a name and content of an invocation parameter are obtained. The name and content of the invocation parameter and the name of the tool are mapped to a syntax intermediate representation. The purpose and domain of the tool in the description information of the tool are mapped to a semantic intermediate representation. The priority and execution dependency relationship information of the tool in the description information of the tool are mapped to an execution intermediate representation, thereby obtaining the first intermediate representation of the tool in the tool information.

Exemplarily, the semantic parsing result of the natural language instruction includes: "location: Istanbul, Turkey". The invocation parameters of the tool include: ""location": {"type": "string"}". The name and content of the invocation parameter are obtained as: location: Istanbul, Turkey. "location: Istanbul, Turkey" and the name of the tool "get_current_weather" are mapped to the syntax intermediate representation: "tool_name": "get_weather", "arguments": {"location": "Istanbul"}. The purpose of the tool "Get the current weather in a given location" and the domain ""domain": "weather"" are mapped to the semantic intermediate representation: "intent": "weather_query", "domain": "weather". The priority of the tool "High Priority" and the execution dependency relationship information ""depends_on": ["tool_x"], "conflict":["tool_y"]" are mapped to the execution intermediate representation: ""priority": High, "depends_on": ["tool_x"], "conflict": ["tool_y"]". The above syntax intermediate representation, semantic intermediate representation, and execution intermediate representation constitute the first intermediate representation of the tool "get_current_weather."

The method provided by this embodiment generates a model-independent first intermediate representation of a tool by parsing and mapping the natural language instruction input by the user and the corresponding tool information. The first intermediate representation isolates the differences in input prompt formats among different models and provides a unified tool definition for subsequent model input adaptation.

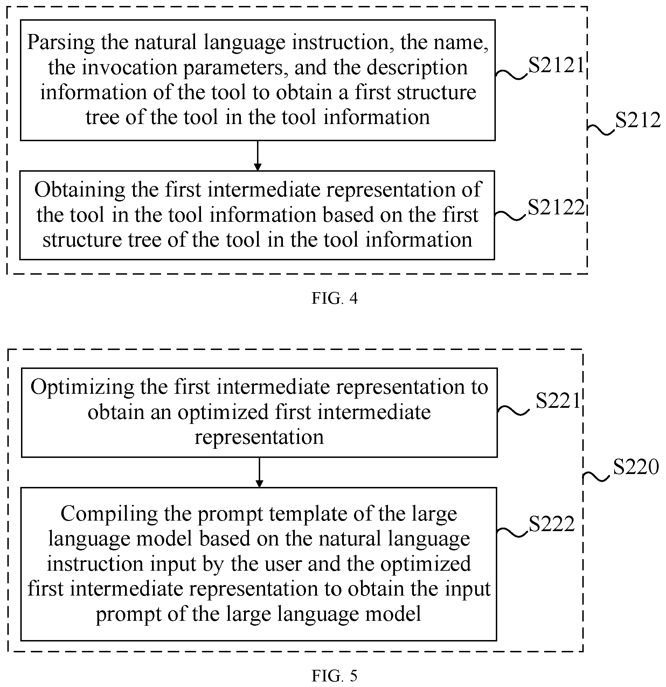

FIG. 4 is a schematic flowchart of step S212 provided by an exemplary embodiment of the present disclosure. As shown in FIG. 4, step S212 may include the following steps S2121 to S2122:
Step S2121: parsing the natural language instruction, the name, the invocation parameters, and the description information of the tool to obtain a first structure tree of the tool in the tool information.

The first structure tree includes a toolset root node, tool branch nodes, parameter leaf nodes, and description information leaf nodes. The tool branch nodes are obtained by parsing the name of the tool, the parameter leaf nodes are obtained by parsing the natural language instruction and the invocation parameters of the tool, and the description information leaf nodes are obtained by parsing the description information of the tool.

It should be noted that each tool corresponds to one tool branch node, the toolset root node includes the respective tool branch nodes, and each tool branch node includes one corresponding parameter leaf node and one corresponding description information leaf node.

In some embodiments, the parsing the natural language instruction, the name, the invocation parameters, and the description information of the tool to obtain the first structure tree of the tool in the tool information includes:
performing lexical analysis on the natural language instruction, the name, the invocation parameters, and the description information of the tool to obtain tokens, i.e., minimum processing units, of the natural language instruction and the tool; performing syntactic analysis on the tokens of the natural language instruction and the tool to obtain first metadata of the tool; and obtaining the first structure tree of the tool in the tool information based on the first metadata of the tool.

In one implementation, the performing lexical analysis on the natural language instruction, the name, the invocation parameters, and the description information of the tool to obtain the tokens of the natural language instruction and the tool includes:
identifying keywords in the natural language instruction, the name, the invocation parameters, and the description information of the tool and marking them as a KEYWORD type, extracting semantic units, and identifying delimiters, thereby obtaining tokens of the natural language instruction and the tool. For example, keywords include messages, tools, parameters, description, and the like. The natural language instruction "query the weather in Istanbul today" is extracted as LITERAL_TEXT. The name of the tool "get_current_weather" is extracted as IDENTIFIER. Delimiters include ":", "{", "}", and the like.

In one implementation, the performing syntactic analysis on the tokens of the natural language instruction and the tool to obtain the first metadata of the tool includes:
performing syntactic analysis on the tokens of the natural language instruction to obtain the intent of the user; performing syntactic analysis on the tokens of the tool to obtain a name, a purpose, a domain, a priority, execution dependency relationship information of the tool, and a name and a type of an invocation parameter; obtaining a name and content of an invocation parameter based on the intent of the user and the name and the type of the invocation parameter; the name, the purpose, the domain, the priority, and the execution dependency relationship information of the tool, and the name and content of the invocation parameter constitute the first metadata of the tool.

In some embodiments, an invocation parameter of the tool has a "required" attribute. If a parameter with the "required" attribute is not defined in the first metadata of the tool, a "Semantic Error" is thrown to avoid generating invalid input prompts subsequently.

In one implementation, the obtaining the first structure tree of the tool in the tool information based on the first metadata of the tool includes:
establishing a toolset root node, mapping the name of the tool in the first metadata to a tool branch node under the toolset root node, mapping the name and content of the invocation parameter of the tool in the first metadata to a parameter leaf node under the corresponding tool branch node, and mapping the purpose, domain, priority, and execution dependency relationship information of the tool in the first metadata to a description information leaf node under the corresponding tool branch node to obtain the first structure tree of the tool in the tool information.

Step S2122: obtaining the first intermediate representation of the tool in the tool information based on the first structure tree of the tool in the tool information.

In some embodiments, the first structure tree is traversed, the content of tool branch nodes and the corresponding parameter leaf nodes and description information leaf nodes in the first structure tree is extracted, the content of the tool branch nodes and the corresponding parameter leaf nodes is mapped to a syntax intermediate representation, the purpose and domain of the tool in the corresponding description information leaf nodes are mapped to a semantic intermediate representation, and the priority and execution dependency relationship information of the tool in the corresponding description information leaf nodes are mapped to an execution intermediate representation, thereby obtaining the first intermediate representation of the tool in the tool information.

The method provided by this embodiment parses the natural language instruction and the corresponding tool information into a first structure tree, thereby achieving a conversion from unstructured or semi-structured data to structured data. By mapping the first structure tree to the first intermediate representation of the tool, differences in input prompt formats among different models are isolated, and a unified tool definition is provided for subsequent model input adaptation.

FIG. 5 is a schematic flowchart of step S220 provided by an exemplary embodiment of the present disclosure. As shown in FIG. 5, step S220 may include the following steps S221 to S222:
Step S221: optimizing the first intermediate representation to obtain an optimized first intermediate representation.

In some embodiments, the first intermediate representation may be optimized based on the syntactic information, semantic information, and execution information of the tool in the first intermediate representation. For example, according to the syntactic information and semantic information of the tool, the first intermediate representations corresponding to tools whose names, parameter information, or purposes are duplicated or have a similarity greater than a preset threshold are deleted, so as to reduce the length of the subsequently generated input prompt and thereby reduce the resource consumption of the large language model. As another example, according to the execution information of the tool, the first intermediate representations of the tools are sorted in descending order of the priority of the tool, so that when the input prompt is subsequently generated, a tool with a high priority, i.e., a tool more consistent with the current user intent, is placed at a position where the large language model has the most concentrated attention, thereby improving the accuracy of reasoning of the large language model.

Step S222: compiling the prompt template of the large language model based on the natural language instruction input by the user and the optimized first intermediate representation to obtain the input prompt of the large language model.

In some embodiments, the prompt template of the target large language model is read. The optimized first intermediate representation is traversed, and the syntactic information and semantic information of the tool are inserted between tool placeholders of the prompt template. A high-priority tool list, a medium-priority tool list, and tool invocation requirements are generated according to the priority of the tool in the execution information of the tool, and are inserted into a system placeholder of the prompt template. A dependency relationship description is generated according to the execution dependency relationship information of the tool in the execution information of the tool, and is inserted into the system placeholder of the prompt template. The natural language instruction input by the user is inserted into a user role placeholder, thereby obtaining the input prompt of the large language model.

For example, the syntactic information and semantic information of the tool are inserted between the "<tools>" and "</tools>" placeholders of the prompt template. "You must invoke tools in the following priority order" (tool invocation requirement) and a high-priority tool list and a medium-priority tool list are inserted into the "system" placeholder of the prompt template. "The output result of tool B must be obtained before invoking tool A" (dependency relationship description) is inserted into the "system" placeholder of the prompt template. "Query the weather in Istanbul today" (the natural language instruction input by the user) is inserted into the "user" placeholder, thereby obtaining the input prompt of the large language model.

In some embodiments, a token count is performed on the generated input prompt. If the token count exceeds a context window limit of the target large language model, the input prompt is trimmed, for example, by compressing the descriptive information of tools or removing tools with lower priorities, to ensure that the input prompt conforms to the context window limit of the target large language model.

The method provided by this embodiment can reduce the length of the subsequently generated input prompt through optimization of the first intermediate representation, thereby reducing the resource consumption of the large language model, and can also improve the attention of the large language model to high-priority tools, thereby improving the accuracy of reasoning of the large language model. By compiling the prompt template of the large language model to dynamically generate the input prompt, a generation from a unified first intermediate representation to multiple heterogeneous input prompts is achieved, improving the flexibility and scalability of multi-model adaptation.

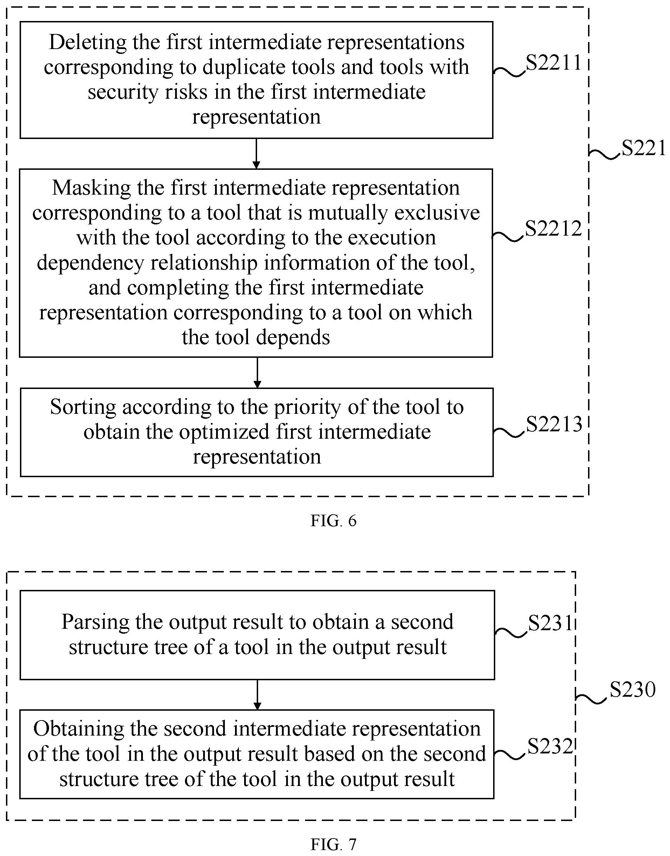

FIG. 6 is a schematic flowchart of step S221 provided by an exemplary embodiment of the present disclosure. As shown in FIG. 6, step S221 may include the following steps S2211 to S2213:
Step S2211: deleting the first intermediate representations corresponding to duplicate tools and tools with security risks in the first intermediate representation.

In some embodiments, the first intermediate representation is traversed. According to the syntactic information and semantic information of the tool, it is detected whether the name, parameter information, or purpose of the tool is duplicated or has a similarity greater than a preset threshold, and if so, only one of the first intermediate representations corresponding to one of the tools is retained according to a preset rule (for example, retaining the tool with fewer dependency relationships), and the first intermediate representations corresponding to the other duplicate tools are deleted. It is detected whether the name or purpose of the tool is consistent with or has a similarity greater than a preset threshold with a high-risk semantic in a high-risk semantic feature library. If so, the tool is determined to be a tool with security risks, and the first intermediate representation corresponding to the tool is deleted.

It should be noted that a "high-risk semantic feature library" is pre-stored in the electronic device, in which high-risk semantics are defined, such as privilege escalation, privilege modification, modification of underlying system configurations, password resetting, and the like.

Step S2212: masking the first intermediate representation corresponding to a tool that is mutually exclusive with the tool according to the execution dependency relationship information of the tool, and completing the first intermediate representation corresponding to a tool on which the tool depends.

In some embodiments, the first intermediate representation is traversed. According to the execution dependency relationship information of the tool, it is detected whether there is a tool that is mutually exclusive with the tool. If so, the first intermediate representation corresponding to the tool that is mutually exclusive with the tool is masked (for example, making its first intermediate representation invisible to the user). It is detected whether there is a tool on which the tool depends. If so, it is detected according to the name of the tool whether there is a first intermediate representation corresponding to the dependent tool. If not, the first intermediate representation corresponding to the tool on which the tool depends is completed.

Step S2213: sorting according to the priority of the tool to obtain the optimized first intermediate representation.

In some embodiments, the first intermediate representation is traversed. According to the execution information of the tool, the first intermediate representations of the tools are sorted in descending order of the priority of the tool to obtain the optimized first intermediate representation.

The method provided by this embodiment reduces redundant information by deleting the first intermediate representations corresponding to duplicate tools, thereby reducing the length of the generated input prompt and thus reducing the resource consumption and the degree of confusion during reasoning of the large language model. By deleting the first intermediate representations corresponding to tools with security risks, security filtering is performed to avoid subsequent erroneous triggering of invocations of high-risk tools and improve the security of the system. By masking the first intermediate representations corresponding to mutually exclusive tools and completing the first intermediate representations corresponding to dependent tools, the accuracy of the large language model in reasoning about the execution dependency relationships of tools is improved. By sorting the first intermediate representations according to priority, when the input prompt is subsequently generated, a tool with a high priority, i.e., a tool more consistent with the current user intent, is placed at a position where the large language model has the most concentrated attention, thereby improving the accuracy of reasoning of the large language model.

FIG. 7 is a schematic flowchart of step S230 provided by an exemplary embodiment of the present disclosure. As shown in FIG. 7, step S230 includes the following steps S231 to S232:
Step S231: parsing the output result to obtain a second structure tree of a tool in the output result.

The second structure tree includes a toolset root node, tool branch nodes, parameter leaf nodes, and execution information leaf nodes.

In some embodiments, the parsing the output result to obtain a second structure tree of a tool in the output result includes:
determining a tool tag according to the target large language model; extracting content corresponding to the tool tag in the output result, and performing syntactic analysis thereon to obtain second metadata of the tool; and obtaining the second structure tree of the tool in the output result based on the second metadata of the tool.

In one implementation, the determining a tool tag according to the target large language model includes:
determining a format of the output result according to the target large language model, and determining the tool tag according to the format of the output result. For example, a format of the output result is determined to be an XML-JSON hybrid format according to the target large language model, and the tool tag is determined to be "<tool_call>" according to the format.

In one implementation, the extracting content corresponding to the tool tag in the output result, and performing syntactic analysis thereon to obtain the second metadata of the tool includes:
extracting content corresponding to the tool tag in the output result according to the tool tag, performing syntactic analysis on the content corresponding to the tool tag to obtain a name, execution dependency relationship information, and a name and content of an invocation parameter of the tool, the name, execution dependency relationship information, and the name and content of the invocation parameter of the tool constituting the second metadata of the tool.

In one implementation, the obtaining the second structure tree of the tool in the output result based on the second metadata of the tool includes:
establishing a toolset root node, mapping the name of the tool in the second metadata to a tool branch node under the toolset root node, mapping the name and content of the invocation parameter of the tool in the second metadata to a parameter leaf node under the corresponding tool branch node, and mapping the execution dependency relationship information of the tool in the second metadata to an execution information leaf node under the corresponding tool branch node to obtain the second structure tree of the tool in the tool information.

Step S232: obtaining the second intermediate representation of the tool in the output result based on the second structure tree of the tool in the output result.

The second intermediate representation of the tool is used for indicating syntactic information and second execution information of the tool. The second intermediate representation of the tool has a preset structured format, such as a JSON format.

In some embodiments, the second intermediate representation of the tool includes a syntax intermediate representation and a second execution intermediate representation. The syntax intermediate representation is used for indicating the syntactic information of the tool, and the second execution intermediate representation is used for indicating the second execution information of the tool.

In one implementation, the syntactic information includes a name and invocation parameter information of the tool, and the second execution information includes second execution dependency relationship information of the tool. The invocation parameter information of the tool includes a name and content of an invocation parameter, and the second execution dependency relationship information of the tool includes a tool on which the tool depends during execution.

In some embodiments, the second structure tree is traversed, the content of tool branch nodes and the corresponding parameter leaf nodes and execution information leaf nodes in the second structure tree is extracted, the content of the tool branch nodes and the corresponding parameter leaf nodes is mapped to a syntax intermediate representation, and the execution dependency relationship information of the tool in the corresponding execution information leaf nodes is mapped to a second execution intermediate representation, thereby obtaining the second intermediate representation of the tool in the tool information.

The method provided by this embodiment generates a model-independent second intermediate representation of a tool by parsing and converting the output result of the target large language model. The second intermediate representation isolates the differences in output result formats among different models and provides a unified tool definition for subsequent model output adaptation.

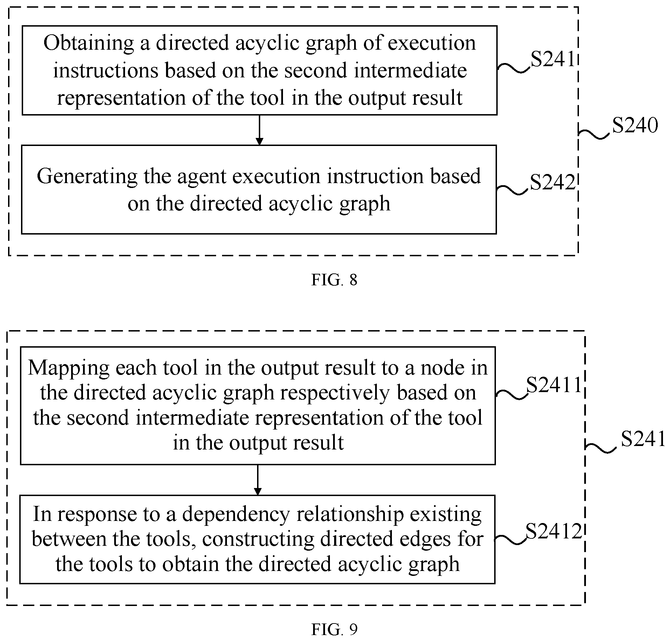

FIG. 8 is a schematic flowchart of step S240 provided by an exemplary embodiment of the present disclosure. As shown in FIG. 8, step S240 includes the following steps S241 to S242:
Step S241: obtaining a directed acyclic graph of execution instructions based on the second intermediate representation of the tool in the output result.

The directed acyclic graph of execution instructions may include nodes and directed edges but does not include cycles.

A name, invocation parameter information, and second execution dependency relationship information of the tool are obtained based on the second intermediate representation of the tool in the output result. Nodes are determined according to the name and invocation parameter information of the tool, dependency relationships between tools are determined according to the second execution dependency relationship information, and directed edges are determined according to the dependency relationships between tools. The directed acyclic graph does not include cycles, i.e., there is no circular dependency relationship between tools.

Step S242: generating the agent execution instruction based on the directed acyclic graph.

Topological sorting is performed on the directed acyclic graph, an execution order of each node in the directed acyclic graph is determined according to the result of the topological sorting, and an agent execution instruction is generated based on the execution order of each node.

The method provided by this embodiment constructs a directed acyclic graph of execution instructions through the second intermediate representation of the tool, and then obtains agent execution instructions. A developer only needs to maintain a single set of standard second intermediate representations of tools to automatically generate agent execution instructions based on the second intermediate representation of the tool, significantly improving the flexibility and scalability of the agent in interfacing with multiple models.

FIG. 9 is a schematic flowchart of step S241 provided by an exemplary embodiment of the present disclosure. As shown in FIG. 9, step S241 includes the following steps S2411 to S2412:
Step S2411: mapping each tool in the output result to a node in the directed acyclic graph respectively based on the second intermediate representation of the tool in the output result.

In one implementation, a name, invocation parameter information, and second execution dependency relationship information of the tool are obtained based on the second intermediate representation of the tool in the output result. Each tool in the output result is mapped to a node in the directed acyclic graph respectively. Attributes of the node include a name and invocation parameter information of the tool.

Step S2412: in response to a dependency relationship existing between the tools, constructing directed edges for the tools to obtain the directed acyclic graph.

In some embodiments, the dependency relationships between tools are determined according to the second execution dependency relationship information. In response to a dependency relationship existing between tools, directed edges are constructed between the tools according to the dependency relationship, thereby obtaining the directed acyclic graph.

Exemplarily, the execution of tool A depends on the output of tool B. In the directed acyclic graph, tool A is mapped to node A, and tool B is mapped to node B. Then a directed edge is constructed between node A and node B: B → A.

The method provided by this embodiment clearly and effectively represents the dependency relationships between tools by constructing the directed acyclic graph of execution instructions, and provides a foundation for the subsequent parallel invocation of tools without dependency relationships.

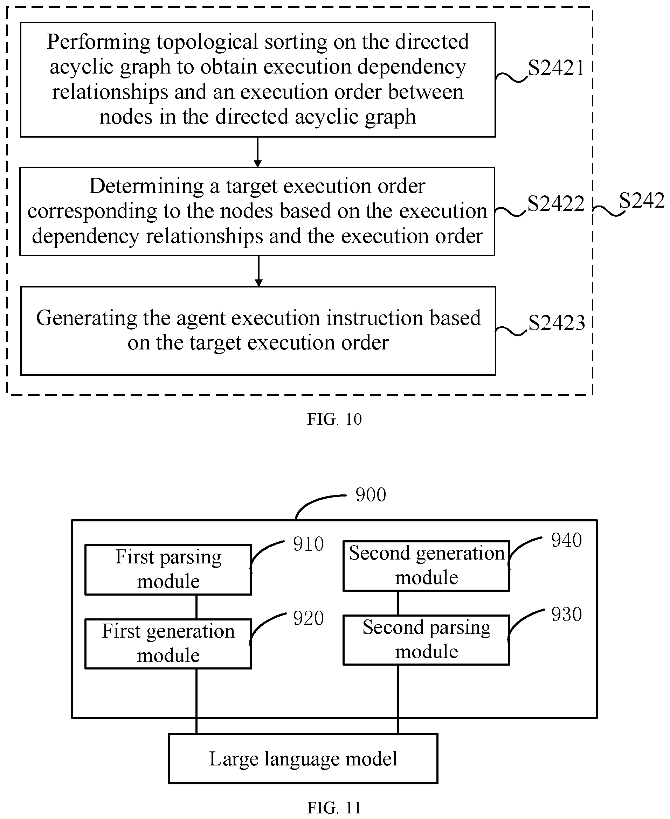

FIG. 10 is a schematic flowchart of step S242 provided by an exemplary embodiment of the present disclosure. As shown in FIG. 10, step S242 includes the following steps S2421 to S2423:

Step S2421: performing topological sorting on the directed acyclic graph to obtain execution dependency relationships and an execution order between nodes in the directed acyclic graph.

A layer-based topological sorting is performed on the directed acyclic graph using a layer-based Kahn algorithm or a depth-first search (DFS) algorithm to obtain a topological sorting result. In the topological sorting result, nodes at the same topological level are mutually independent, and nodes at different topological levels have dependency relationships. The topological level relationship between nodes in the topological sorting result represents the execution dependency relationship between nodes in the directed acyclic graph, and the topological level at which a node resides in the topological sorting result represents the execution order of the node in the directed acyclic graph.

Exemplarily, the directed acyclic graph has five nodes A to E. There is a directed edge between node C and node A: A →C, a directed edge between node D and node B: B → D, and a directed edge between node E and node C: C →E. A layer-based topological sorting is performed on the directed acyclic graph. The nodes at layer 0 are A and B, the nodes at layer 1 are C and D, and the node at layer 2 is E. A and B are mutually independent, C and D are mutually independent, C depends on A, D depends on B, and E depends on C.

Step S2422: determining a target execution order corresponding to the nodes based on the execution dependency relationships and the execution order.

Based on the execution dependency relationships and the execution order, i.e., based on the topological sorting result, the topological level of each node in the directed acyclic graph is determined. Based on the execution dependency relationships, a target execution order is determined for nodes with different topological levels in ascending order of topological levels, and a target execution order is determined for nodes with the same topological level as parallel execution.

Exemplarily, according to the topological sorting result in the example of step S2421, the topological level of each node in the directed acyclic graph is determined. According to the execution dependency relationships: C depends on A, D depends on B, and E depends on C, the target execution order is determined as: A is executed before C, B is executed before D, and C is executed before E. Furthermore, the target execution order for A and B, which have the same topological level, and for C and D, which have the same topological level, is determined as: A and B are executed in parallel, and C and D are executed in parallel.

Step S2423: generating the agent execution instruction based on the target execution order.

According to the target execution order, a parallel execution identifier is added to nodes that can be executed in parallel, and a prerequisite completion condition identifier is added to nodes that need to be executed sequentially. The name and invocation parameter information of the tool corresponding to the node, and the parallel execution identifier and/or the prerequisite completion condition identifier are encapsulated into agent execution instructions.

According to the execution instructions, the agent executes instructions with parallel execution identifiers in a parallel scheduling manner, for example, by initiating concurrent invocations using multi-threading or asynchronous coroutine technology. For instructions with prerequisite completion condition identifiers, the agent executes them in a manner of scheduling sequentially according to topological levels, and when performing scheduling at the current topological level, sends the output result of the instruction at the previous topological level to the instruction to be scheduled at the current topological level.

The method provided by this embodiment performs layer-based topological sorting on the directed acyclic graph, determines the target execution order of tools based on the topological sorting result, and then generates agent execution instructions. This not only ensures that the scheduling order of tools is strictly consistent with the dependency relationships between tools, but also enables concurrent scheduling of tools without dependency relationships, significantly improving the response speed and execution efficiency of the system and achieving optimization of tool scheduling.

### Exemplary Apparatus

FIG. 11 is a schematic structural diagram of an apparatus for generating agent execution instructions provided by an exemplary embodiment of the present disclosure. The apparatus 900 of this embodiment may be used to implement the corresponding method embodiments of the present disclosure. As shown in FIG. 11, the apparatus 900 may include:
a first parsing module 910, configured to obtain a first intermediate representation of a tool in tool information based on a natural language instruction input by a user and tool information corresponding to the natural language instruction, wherein the first intermediate representation of the tool is used for indicating syntactic information, semantic information, and execution information of the tool;
a first generation module 920, configured to obtain an input prompt of a large language model based on the natural language instruction input by the user, the first intermediate representation of the tool in the tool information, and a prompt template of the large language model, and to input the input prompt into the large language model;
a second parsing module 930, configured to acquire an output result of the large language model, and to obtain a second intermediate representation of a tool in the output result based on the output result; and
a second generation module 940, configured to generate an agent execution instruction based on the second intermediate representation of the tool in the output result.

In some embodiments, the first parsing module 910 is specifically configured to: acquire the natural language instruction input by the user and tool information corresponding to the natural language instruction, wherein the tool information includes a name, invocation parameters, and description information of a tool; and obtain the first intermediate representation of the tool in the tool information based on the natural language instruction, the name, the invocation parameters, and the description information of the tool.

In some embodiments, the first parsing module 910 is specifically configured to: parse the natural language instruction, the name, the invocation parameters, and the description information of the tool to obtain a first structure tree of the tool in the tool information, wherein the first structure tree includes a toolset root node, tool branch nodes, parameter leaf nodes, and description information leaf nodes; and obtain the first intermediate representation of the tool in the tool information based on the first structure tree of the tool in the tool information.

In some embodiments, the first generation module 920 is specifically configured to: optimize the first intermediate representation to obtain an optimized first intermediate representation; and compile the prompt template of the large language model based on the natural language instruction input by the user and the optimized first intermediate representation to obtain the input prompt of the large language model.

In some embodiments, the first generation module 920 is specifically configured to: delete the first intermediate representations corresponding to duplicate tools and tools with security risks in the first intermediate representation; mask the first intermediate representation corresponding to a tool that is mutually exclusive with the tool according to the execution dependency relationship information of the tool, and complete the first intermediate representation corresponding to a tool on which the tool depends; and sort according to priorities of the tools to obtain the optimized first intermediate representation.

In some embodiments, the second parsing module 930 is specifically configured to: parse the output result to obtain a second structure tree of a tool in the output result; and obtain the second intermediate representation of the tool in the output result based on the second structure tree of the tool in the output result.

In some embodiments, the second generation module 940 is specifically configured to: obtain a directed acyclic graph of execution instructions based on the second intermediate representation of the tool in the output result; and generate the agent execution instruction based on the directed acyclic graph.

In some embodiments, the second generation module 940 is specifically configured to: map each tool in the output result to a node in the directed acyclic graph respectively based on the second intermediate representation of the tool in the output result; and in response to a dependency relationship existing between the tools, construct directed edges for the tools to obtain the directed acyclic graph.

In some embodiments, the second generation module 940 is specifically configured to: perform topological sorting on the directed acyclic graph to obtain execution dependency relationships and an execution order between nodes in the directed acyclic graph; determine a target execution order corresponding to the nodes based on the execution dependency relationships and the execution order; and generate the agent execution instruction based on the target execution order.

It should be noted that, since the information interaction and execution process between the modules/units in the above apparatus embodiment are based on the same inventive concept as the method embodiment of the present disclosure, specific content can be found in the description in the method embodiment of the present disclosure, and the beneficial technical effects corresponding to the apparatus exemplary embodiment can also be found in the corresponding beneficial technical effects of the above exemplary method section, which will not be repeated herein.

### Exemplary Electronic Device

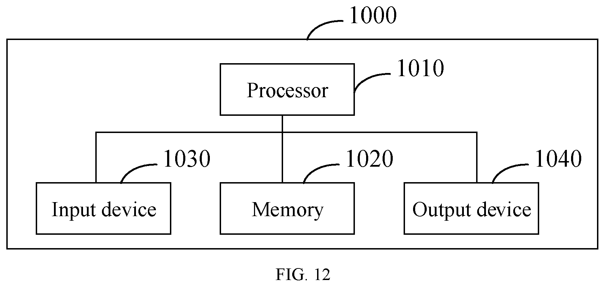

FIG. 12 is a structural diagram of an electronic device provided by an exemplary embodiment of the present disclosure. As shown in FIG. 12, the electronic device 1000 includes at least one processor 1010 and a memory 1020.

The processor 1010 may be a central processing unit (CPU) or another form of processing unit having data processing capability and/or instruction execution capability, and may control other components in the electronic device 1000 to perform a desired function.

The memory 1020 may include one or more computer program products. The computer program product may include various forms of computer-readable storage media, such as volatile memory and/or non-volatile memory. The volatile memory may include, for example, random access memory (RAM) and/or cache memory (cache). The non-volatile memory may include, for example, read-only memory (ROM), hard disk, flash memory, and the like. One or more computer program instructions may be stored on the computer-readable storage medium, and the processor 1010 may run the one or more computer program instructions to implement the method for generating agent execution instructions and/or other desired functions in the above embodiments of the present disclosure.

In one example, the electronic device 1000 may further include: an input device 1030 and an output device 1040, and these components are interconnected through a bus system and/or other forms of connection mechanisms (not shown).

The input device 1030 may further include, for example, a keyboard, a mouse, and the like.

The output device 1040 can output various information to the outside, and may include, for example, a display, a speaker, a printer, a communication network and remote output devices connected thereto, and the like.

Of course, for simplicity, only some of the components in the electronic device 1000 related to the present disclosure are shown in FIG. 12, while components such as a bus, an input/output interface, and the like are omitted. In addition, according to specific application scenarios, the electronic device 1000 may further include any other appropriate component.

### Exemplary Computer Program Product and Computer-Readable Storage Medium

In addition to the above method and device, the embodiments of the present disclosure may further provide a computer program product including computer program instructions, which when run by a processor, cause the processor to execute the steps in the method for generating agent execution instructions in the various embodiments of the present disclosure described in the above "Exemplary Method" section.

The computer program product may be written in any combination of one or more programming languages to write program code for performing the operations of the embodiments of the present disclosure. The programming languages include object-oriented programming languages, such as Java, C++, and the like, and also include conventional procedural programming languages, such as the "C" language or similar programming languages. The program code may be executed entirely on a user computing device, partly on a user device, as a standalone software package, partly on a user computing device and partly on a remote computing device, or entirely on a remote computing device or server.

Furthermore, the embodiments of the present disclosure may also be a computer-readable storage medium having computer program instructions stored thereon, which when run by a processor, cause the processor to execute the steps in the method for generating agent execution instructions in the various embodiments of the present disclosure described in the above "Exemplary Method" section.

The computer-readable storage medium may adopt any combination of one or more readable media. The readable medium may be a readable signal medium or a readable storage medium. The readable storage medium may include, but is not limited to, for example, an electrical, magnetic, optical, electromagnetic, infrared, or semiconductor system, apparatus, or device, or any combination of the above. More specific examples (a non-exhaustive list) of the readable storage medium include: an electrical connection having one or more wires, a portable disk, a hard disk, random access memory (RAM), read-only memory (ROM), erasable programmable read-only memory (EPROM or flash memory), optical fiber, portable compact disc read-only memory (CD-ROM), an optical storage device, a magnetic storage device, or any suitable combination of the above.

The basic principles of the present disclosure have been described above in conjunction with specific embodiments. However, the advantages, effects, and the like mentioned in the present disclosure are merely examples and not limitations, and should not be considered as necessarily possessed by each embodiment of the present disclosure. Moreover, the specific details disclosed above are merely for the purpose of illustration and ease of understanding and are not limitations, and the above details do not limit the present disclosure to necessarily being implemented with the above specific details.

Those skilled in the art may make various modifications and variations to the present disclosure without departing from the spirit and scope of the present application. Thus, if these modifications and variations of the present application fall within the scope of the claims of the present disclosure and their equivalents, the present disclosure is also intended to include these modifications and variations.

## Claims

1. A method for generating agent execution instructions, comprising:
obtaining (S210) a first intermediate representation of a tool in tool information based on a natural language instruction input by a user and tool information corresponding to the natural language instruction, wherein the first intermediate representation of the tool is used for indicating syntactic information, semantic information, and execution information of the tool;
obtaining (S220) an input prompt of a large language model based on the natural language instruction input by the user, the first intermediate representation of the tool in the tool information, and a prompt template of the large language model; inputting the input prompt into the large language model to obtain an output result of the large language model;
obtaining (S230) a second intermediate representation of a tool in the output result based on the output result; and
generating (S240) an agent execution instruction based on the second intermediate representation of the tool in the output result.

2. The method according to claim 1, wherein the obtaining (S210) a first intermediate representation of a tool in tool information based on a natural language instruction input by a user and tool information corresponding to the natural language instruction comprises:
acquiring (S211) the natural language instruction input by the user and tool information corresponding to the natural language instruction, the tool information comprising a name, invocation parameters, and description information of a tool; and
obtaining (S212) the first intermediate representation of the tool in the tool information based on the natural language instruction, the name, the invocation parameters, and the description information of the tool.

3. The method according to claim 2, wherein the obtaining (S212) the first intermediate representation of the tool in the tool information based on the natural language instruction, the name, the invocation parameters, and the description information of the tool comprises:
parsing (S2121) the natural language instruction, the name, the invocation parameters, and the description information of the tool to obtain a first structure tree of the tool in the tool information, wherein the first structure tree comprises a toolset root node, tool branch nodes, parameter leaf nodes, and description information leaf nodes, the tool branch nodes are obtained by parsing the name of the tool, the parameter leaf nodes are obtained by parsing the natural language instruction and the invocation parameters of the tool, and the description information leaf nodes are obtained by parsing the description information of the tool; and
obtaining (S2122) the first intermediate representation of the tool in the tool information based on the first structure tree of the tool in the tool information.

4. The method according to any one of claims 1 to 3, wherein the obtaining (S220) an input prompt of a large language model based on the natural language instruction input by the user, the first intermediate representation of the tool in the tool information, and a prompt template of the large language model comprises:
optimizing (S221) the first intermediate representation to obtain an optimized first intermediate representation; and
compiling (S222) the prompt template of the large language model based on the natural language instruction input by the user and the optimized first intermediate representation to obtain the input prompt of the large language model.

5. The method according to claim 4, wherein the optimizing (S221) the first intermediate representation to obtain an optimized first intermediate representation comprises:
deleting (S2211) the first intermediate representations corresponding to duplicate tools and tools with security risks in the first intermediate representation;
masking (S2212) the first intermediate representation corresponding to a tool that is mutually exclusive with the tool according to execution dependency relationship information of the tool, and completing the first intermediate representation corresponding to a tool on which the tool depends; and
sorting (S2213) according to priorities of the tools to obtain the optimized first intermediate representation.

6. The method according to any one of claims 1 to 3, wherein the obtaining (S230) a second intermediate representation of a tool in the output result based on the output result comprises:
parsing (S231) the output result to obtain a second structure tree of a tool in the output result; and
obtaining (S232) the second intermediate representation of the tool in the output result based on the second structure tree of the tool in the output result.

7. The method according to any one of claims 1 to 3, wherein the generating (S240) an agent execution instruction based on the second intermediate representation of the tool in the output result comprises:
obtaining (S241) a directed acyclic graph of execution instructions based on the second intermediate representation of the tool in the output result; and
generating (S242) the agent execution instruction based on the directed acyclic graph.

8. The method according to claim 7, wherein the obtaining (S241) a directed acyclic graph of execution instructions based on the second intermediate representation of the tool in the output result comprises:
mapping (S2411) each tool in the output result to a node in the directed acyclic graph respectively based on the second intermediate representation of the tool in the output result; and
in response to a dependency relationship existing between the tools, constructing (S2412) directed edges for the tools to obtain the directed acyclic graph.

9. The method according to claim 7, wherein the generating (S242) the agent execution instruction based on the directed acyclic graph comprises:
performing (S2421) topological sorting on the directed acyclic graph to obtain execution dependency relationships and an execution order between nodes in the directed acyclic graph;
determining (S2422) a target execution order corresponding to the nodes based on the execution dependency relationships and the execution order; and
generating (S2423) the agent execution instruction based on the target execution order.

10. An apparatus for generating agent execution instructions, comprising:
a first parsing module (910), configured to obtain a first intermediate representation of a tool in tool information based on a natural language instruction input by a user and tool information corresponding to the natural language instruction, wherein the first intermediate representation of the tool is used for indicating syntactic information, semantic information, and execution information of the tool;
a first generation module (920), configured to obtain an input prompt of a large language model based on the natural language instruction input by the user, the first intermediate representation of the tool in the tool information, and a prompt template of the large language model, and to input the input prompt into the large language model;
a second parsing module (930), configured to acquire an output result of the large language model, and to obtain a second intermediate representation of a tool in the output result based on the output result; and
a second generation module (940), configured to generate an agent execution instruction based on the second intermediate representation of the tool in the output result.

11. The apparatus for generating agent execution instructions according to claim 10, wherein the first parsing module (910) is configured to:
acquire the natural language instruction input by the user and tool information corresponding to the natural language instruction, wherein the tool information includes a name, invocation parameters, and description information of a tool; and obtain the first intermediate representation of the tool in the tool information based on the natural language instruction, the name, the invocation parameters, and the description information of the tool.

12. The apparatus for generating agent execution instructions according to claim 11, wherein the first parsing module (910) is configured to:
parse the natural language instruction, the name, the invocation parameters, and the description information of the tool to obtain a first structure tree of the tool in the tool information, wherein the first structure tree includes a toolset root node, tool branch nodes, parameter leaf nodes, and description information leaf nodes; and obtain the first intermediate representation of the tool in the tool information based on the first structure tree of the tool in the tool information.

13. The apparatus for generating agent execution instructions according to any one of claims 10 to 12, wherein the first generation module (920) is configured to:
optimize the first intermediate representation to obtain an optimized first intermediate representation; and compile the prompt template of the large language model based on the natural language instruction input by the user and the optimized first intermediate representation to obtain the input prompt of the large language model.

14. A computer-readable storage medium storing a computer program, wherein the computer program, when executed by a processor, causes the processor to execute the method for generating agent execution instructions according to any one of claims 1 to 9.

15. An electronic device (1000), comprising:
a processor (1010);
a memory (1020) for storing instructions executable by the processor (1010); and
the processor (1010), configured to read the executable instructions from the memory (1020) and execute the instructions to implement the method for generating agent execution instructions according to any one of claims 1 to 9.
